# EUROPEAN PATENT APPLICATION

(11) **EP 0 628 825 A1**
(43) Date of publication of application: **14.12.1994**
(21) Application number: 94107930.3
(22) Date of filing: 24.05.1994
(51) Int. Cl.: G01P 13/00

(54) **Motion sensor, particularly for anti-theft devices**

(30) Priority: 11.06.1993 IT MI931241
(71) Applicant: Marchesi, Maria Antonia, I-20020 Lainate (Milano) (IT)
(72) Inventor: Merlo, Vincenzo, I-20020 Lainate, Milano (IT)
(74) Representative: Forattini, Amelia

(57) **Abstract**

A motion sensor, particularly for anti-theft devices for vehicles, includes a hollow sphere which is fixed to a piezoelectric plate; the internal surface of the sphere is rough. Inside the hollow sphere there is a ball which may be made of metal, so that a movement of the hollow sphere is matched by a movement of the ball that makes the hollow sphere vibrate. The vibration thus produced is converted by the piezoelectric plate into an electric signal to activate the circuit of the alarm device.

## Description

The present invention relates to a motion sensor, particularly for anti-theft devices.

Anti-theft devices for vehicles are known that include a motion sensor suitable to operate an electric circuit to activate an alarm or other devices for immobilizing the vehicle.

Known sensors currently in use include those which are constituted by a piezoelectric plate that supports a weight or those in which the plate itself is supported by a metal wire. Mechanical vibrations are thus converted into electric signals that can be used by the electric circuit of the alarm system.

However, sensors of this kind obviously do not allow to detect certain movements, particularly slow ones.

Other types of sensor are also known that are based on detection by means of ultrasound. The greatest drawbacks of these systems are complicated construction and high cost.

The aim of the present invention is to provide a motion sensor that can detect any kind of motion, for example of a vehicle.

Within the scope of this aim, an object of the invention is to provide a motion sensor that is constructively simple and is therefore reliable and cheap.

Another object of the invention is to provide a sensor that can be used in any kind of anti-theft device.

This aim, these objects and others which will become apparent hereinafter are achieved by a motion sensor as described in the accompanying claims.

Further characteristics and advantages will become apparent from the description of a preferred but not exclusive embodiment of the invention, illustrated only by way of non-limitative example in the accompanying drawings, wherein:
Figure 1 is a partially cutout perspective view of the sensor according to the invention;
Figure 2 is a sectional view of the sensor of Figure 1;
Figure 3 is sectional view of the sensor inside a container;
Figure 4 is a perspective view of the sensor according to another aspect of the invention;
Figure 5 is a perspective view of the sensor according to a third aspect of the invention;
Figure 6 is a schematic view of a padlock provided with a sensor according to the invention.
Figure 7 is an exploded view of the sensor according to a further aspect of the invention;
Figure 8 is a perspective view of the sensor of Figure 7; and
Figure 9 is a longitudinal section view of the sensor of Figures 7 and 8.

With reference to the above figures, the motion sensor, generally designated by the reference numeral 1, includes a container body 3 which is preferably constituted by a hollow sphere the internal surface 5 of which is uneven. The sphere 3 is advantageously produced by molding two hemispheres made of plastic, for example ABS, or of metal or metal mesh.

A moving part, preferably constituted by a metal ball 7, is placed inside the sphere. The hollow sphere 3 is in turn associated, for example by gluing, with a piezoelectric component preferably constituted by a piezoelectric plate 9.

The piezoelectric plate 9 can be rigidly fixed to a board 11 of an electric circuit and can be connected to the circuit by means of the connectors 13.

The operation of the sensor is as follows.

When the sensor is moved from its rest position, for example when it is tilted, the ball rolls on the internal surface of the hollow sphere, making it vibrate. The vibration of the hollow sphere is transmitted to the piezoelectric plate, which converts it into an electric signal, activating the alarm circuit.

In practice it has been observed that the invention achieves the intended aim and objects; in particular, it is evident that the sensor allows to detect even very slow movements, and this is an essential characteristic in "anti-lifting" alarm systems.

An advantage of the invention is that it provides a sensor that is extremely efficient in detecting both slow movements and vibrations, differently from conventional sensors, which are unable to detect both types of movement with the same efficiency.

It is also evident that the sensor according to the invention is capable of detecting movements over a solid angle of 360°.

Another advantage of the invention is its manufacturing, which is extremely economical from the point of view of production.

The device according to the invention is susceptible of numerous modifications and variations, all of which are within the scope of the inventive concept; all the details may furthermore be replaced with technically equivalent elements.

For example, the container body may be made with shapes other than the spherical one. Furthermore, it is also possible to provide a smooth internal surface of the container body that acts with a movable part constituted by a regular or irregular polyhedron instead of a sphere.

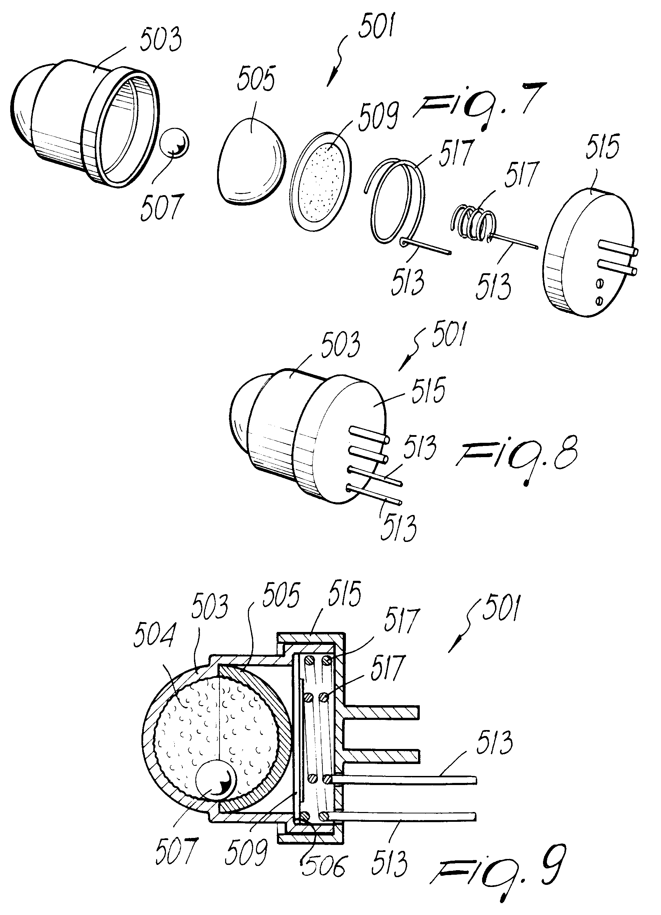

Figures 4 and 5 illustrate two sensors according to further aspects of the invention.

Figure 4 is a view of a sensor 101 which is constituted by a toroidal helical spring 103 inside which a ball 107 can move. The toroidal spring 103 is fixed to a piezoelectric plate 109 which is connected to the electric circuit by means of the connectors 113.

Figure 5 is a view of a sensor 201 that includes a container body which is constituted by a cylindrical part 203 that has a regular or irregular set of teeth 205 and is closed by a plug 206 on one side and by a piezoelectric plate 209 on the other side.

The embodiments shown in Figures 4 and 5 reduce the sensitivity of the sensor for certain angles.

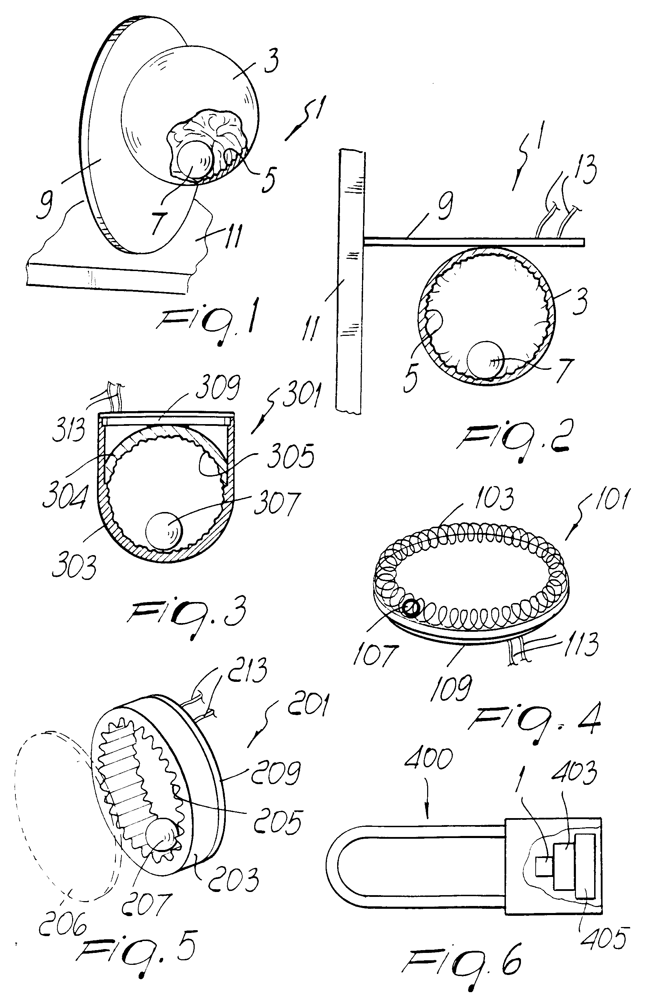

Figure 3 shows a sensor 301 of the type shown in Figures 1 and 2, mounted inside a casing. Specifically, the sensor includes a first part 303 which is substantially dome-shaped and a second part 305 which is suitable to form the second hemisphere. A ball 307 can move inside the container body, which is provided with protrusions 305, and the vibrations that are produced are converted into an electrical signal by the piezoelectric plate 309.

Figs. 7-9 show a sensor 501 according to a further aspect of the invention.

The sensor 501 comprises a dome-shaped first part 503 and a second part 505 mounted inside the first part and adapted to form the second hemisphere of the hollow portion 504. The hollow portion 504 has an uneven, or rough, surface 505 and a ball 507 is placed in the hollow portion 504.

A piezoelectric plate 509 is arranged at a step 506 of the first part 503 and in contact with the second part 505. A cover member 515 closes the first part 503 and two spring members 517 are arranged between the cover member 515 and the piezoelectric plate 509. The spring members 517 respectively comprise connectors 513 adapted to connect the sensor to a board (not illustrated).

The sensor 501 can be assembled without the use of glue or weldings. In fact after all the components are assembled, respectively the ball 507 into the first part 503, the second part 505, the plate 509, and the two spring members 517, the cover member 515 is simply associated with the first part 503 in a snap together manner.

Finally, Figure 6 shows an example of application of the sensor according to the invention. A padlock 400, for example of the type suitable to lock a two-wheeled vehicle, includes a motion sensor 1 which is associated with a transmitter 403 that is powered by a power supply means 405 constituted for example by an ordinary dry battery.

When the padlock 400 is moved, the sensor 1 activates the transmitter 403, which sends an alarm condition signal to a receiver which is associated with the alarm device installed on the vehicle.

The materials employed, as well as the dimensions, may naturally be any according to the requirements and the state of the art.
Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Motion sensor, particularly for anti-theft devices, characterized in that it comprises a container body (3,103,203,303) which is rigidly associated with a piezoelectric component (9,109,209,309) that is connected to an electric circuit, a moving part (7,107,207,307) inside said container body being suitable to produce vibrations in said container body as a consequence of a movement of said container body, said vibrations being suitable to generate electric signals by virtue of said piezoelectric means.

2. Sensor according to claim 1, characterized in that said container body is constituted by a ball (7,107,207,307) that can move inside said container body, said container body comprising an internal surface having protrusions (5, 205, 305).

3. Sensor according to claim 1 or 2, characterized in that said container body is made of plastic material by molding.

4. Sensor according to one or more of the preceding claims, characterized in that said sphere is constituted by two hemispheres.

5. Sensor according to one or more of the preceding claims, characterized in that said movable part is constituted by a metal ball (7,107,207,307).

6. Sensor according to one or more of the preceding claims, characterized in that said piezoelectric component is constituted by a piezoelectric plate (9) which is rigidly associated with a board (11) of said electric circuit.

7. Sensor according to one or more of the preceding claims, characterized in that said movable part is constituted by an appropriately faceted polyhedron that can move inside said container body, said container body comprising a smooth internal surface.

8. Sensor according to claim 1, characterized in that said container body is constituted by a toroidal helical spring (103) which is associated with a piezoelectric plate (109), said movable part being constituted by a ball (107) that can move inside said spring.

9. Sensor according to claim 1, characterized in that said container body is constituted by a cylindrical part (203) that comprises an internal set of teeth (205), said cylindrical part being closed by a piezoelectric plate (209) at one end and by a plug (206) at the other end.

10. Sensor, according to claim 1, characterized in that it comprises a dome-shaped first part (503) and a second part (505) mounted inside said first part, said first part and said second part being adapted to form said container body, said container body having an uneven internal surface, said piezoelectric means comprising a piezoelectric plate (509) arranged inside said first part and in contact with said second part, a cover member (515) being adapted to close said first part and spring means (517) being arranged between said cover member and said piezoelectric plate.

11. Sensor, according to claim 10, wherein said spring means (517) have contact means (513) for connecting said piezoelectric plate to the outside.

12. Anti-theft device, characterized in that it comprises a motion sensor having a container body (3,103,203,303) which is rigidly associated with a piezoelectric component (9,109,209,309) that is connected to an electric circuit, a moving part (7,107,207,307) inside said container body being suitable to produce vibrations in said container body as a consequence of a movement of said container body, said vibrations being suitable to generate electric signals by virtue of said piezoelectric means.

13. Anti-theft device according to one or more of the preceding claims, characterized in that it comprises: an alarm control unit which is installed on a vehicle and is provided with a receiver means; a padlock means (400) which is suitable to close said vehicle and comprises a sensor (1), a transmission means (403) and a power supply means (405); said sensor being suitable to activate said transmission means to send an alarm condition signal to said control unit.
